(19) Europäisches Patentamt
European Patent Office
Office européen des brevets

(11) EP 2 461 425 A1

(12) EUROPEAN PATENT APPLICATION
published in accordance with Art. 153(4) EPC

(43) Date of publication:
06.06.2012 Bulletin 2012/23

(51) Int Cl.:
H01Q 7/06 (2006.01)          G06K 19/07 (2006.01)
G06K 19/077 (2006.01)        H01F 27/00 (2006.01)

(21) Application number: 10804408.2

(22) Date of filing: 27.07.2010

(86) International application number:
PCT/JP2010/062618

(87) International publication number:
WO 2011/013662 (03.02.2011 Gazette 2011/05)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 28.07.2009 JP 2009175751

(71) Applicant: Sony Chemical & Information Device
Corporation
Tokyo 141-0032 (JP)

(72) Inventors:
• ORIHARA, Katsuhisa
Tokyo 141-0032 (JP)

• SUGITA, Satoru
Tokyo 141-0032 (JP)
• SAITO, Norio
Tokyo 141-0032 (JP)
• KANNO, Masayoshi
Tokyo 108-0075 (JP)

(74) Representative: Müller - Hoffmann & Partner
Patentanwälte
Innere Wiener Straße 17
81667 München (DE)

(54) ANTENNA DEVICE AND COMMUNICATION DEVICE

(57) An antenna device that is able to maintain the resonance frequency approximately constant despite changes in temperature to provide for stabilized communication is provided. The antenna device includes an antenna coil (11a) that receives a magnetic field transmitted from a reader/ writer (2) and a capacitor (11b). The antenna device also includes a magnetic sheet (12) formed at a face-to-face position with respect to the antenna coil (11a) and configured for changing the inductance of the antenna coil (11a). The capacitor (11b) has a temperature characteristic in which the capacitance of the capacitor is changed with changes in temperature. The magnetic sheet (12) is formed of a magnetic material having a temperature characteristic in which the inductance of the antenna coil (11a) is made to be changed with an opposite sign of change to that of the capacitance of the capacitor (11b) that is changed with changes in temperature in the working temperature range. In this manner, the resonance frequency of the antenna circuit (11) in the working temperature range may be brought approximately into coincidence with the oscillation frequency of the reader/ writer (2).

FIG.1

## Description

Field of the Invention

This invention relates to an antenna device that provides for a communication enabled state by electromagnetic induction between it and a transmitter that transmits a magnetic field, and to a communication device with the antenna device built in the communication device.

The present application claims priority rights which are based on the Japanese patent application No.2009-175751 filed in Japan on July 28, 2009. The contents of the patent application of the senior filing data are to be incorporated by reference into the present patent application.

Background of the Invention

In these days, the near field communication technology of signal transmission and reception by electromagnetic induction has been established and its use has extended in the form of tickets for public means of transit or electronic money. The function of near field communication tends to be loaded on mobile phones as well and its use in time to come is felt to be promising. The near field communication technology is not limited to proximity communication by electromagnetic induction, such that, in the field of logistics, an IC tag that enables read/ write at a distance of several meters has been commercialized. The near field communication technology not only enables near field communication, but also provides for power transmission at the same time. Consequently, the technology may be implemented on an IC card which does not own its own power supply, such as a battery.

In a system that implements the above mentioned near field communication, near field communication and power transmission are effected between a reader/ writer and a wireless data carrier. To this end, a capacitor for resonance is connected to a loop antenna, and the resonance frequency, as determined by a constant LC of the loop antenna and the capacitor, is tuned to a preset system frequency. By so doing, stabilized communication may be established between the reader/ writer and the wireless data carrier at a maximized communication distance.

However, the constant LC of the loop antenna and the capacitor for resonance has a number of factors of variations and may not necessarily be set at a scheduled value. For example, in the wireless data carrier, the loop antenna is formed by a copper foil pattern to reduce the cost. Hence, the value of L is varied due to, for example, deviations in pattern widths. Similarly, the capacitor for resonance is formed with the use of a copper foil of an antenna board as an electrode and with the use of the resin of the board as a dielectric material, again to reduce the cost. Hence, the capacitance is changed with the width, length or the pitch of the copper pattern. On the other hand, a protective film is finally laminated on each of upper and lower sides of the antenna board for use of the antenna board as an IC card. However, the capacitance is varied under the influence of the protective film. Thus, to take the frequency shift following the lamination of the protective film into account, the copper foil pattern is partially removed by way of prospective adjustment with a view to adjusting the electrode area as well as the capacitance value of the capacitor for resonance.

The above mentioned various factors of variations may give rise to shifting of the resonance frequency to destabilize communication or to reduce the communication distance. To cope with such problem, Patent Document 1 shows, in connection with an antenna module, a method of adjusting the resonance frequency by adjustment of the capacitance of the variable capacitor to provide for stability in communication. The antenna module includes an antenna coil that receives magnetic fluxes output from the reader/ writer and a resonance circuit that efficiently converts changes in the magnetic fluxes into an electrical voltage.

Related Technical Documents

Patent Document

Patent Document 1: Japanese Laid-Open Patent Publication 2009-111483

Disclosure of the Invention

Problem to be solved by the Invention

In the antenna of the Patent Document 1, the resonance frequency may be adjusted by adjusting the capacitance of the variable capacitor, as described above. However, the variable capacitor has a temperature characteristic that its capacitance is varied in response to changes in temperature. This may give rise to a problem that, in a resonance circuit with the built-in variable capacitor, the resonance frequency is changed with changes in temperature, even though correct adjustment has been made of the resonance frequency.

In view of the above-depicted status of the art, it is an object of the present invention to provide an antenna device in which the resonance frequency may be maintained approximately constant despite changes in temperature, such as to provide for stabilized communication. It is also aimed at by the present invention to provide a communication device having the above antenna device built in the communication device.

Summary of the Invention

As a means to accomplish the above object, 1an antenna device according to the present invention includes a resonance circuit and a magnetic sheet. The resonance circuit includes an antenna coil, receiving a magnetic field transmitted at preset an oscillation frequency from a transmitter, and a capacitor electrically connected to the antenna coil. The resonance circuit is inductively coupled to the transmitter to provide for a transmission enabled state. The magnetic sheet is provided at a face-to-face position with respect to the antenna coil and configured for changing the inductance of the antenna coil. The capacitor has a temperature characteristic in which the capacitance of the capacitor is changed with changes in temperature in the working temperature range. The magnetic sheet is formed of a magnetic material having a temperature characteristic in which the inductance of the antenna coil is changed with a characteristic opposite to that of the capacitance of the capacitor so that the resonance frequency of the resonance circuit in the working temperature range will be brought into coincidence approximately with the oscillation frequency.

A communication device according to the present invention includes a resonance circuit including an antenna coil, receiving a magnetic field transmitted at preset an oscillation frequency from a transmitter, and a capacitor electrically connected to the antenna coil. The resonance circuit is inductively coupled to the transmitter to provide for a transmission enabled state. The communication device also includes a magnetic sheet provided at a face-to-face position with respect to the antenna coil and configured for changing the inductance of the antenna coil, and a communication processor driven by a current flowing through the resonance circuit to have communication with the transmitter. The capacitor has a temperature characteristic in which the capacitance of the capacitor is changed with changes in temperature in the working temperature range. The magnetic sheet is formed of a magnetic material having a temperature characteristic in which the inductance of the antenna coil is changed with a characteristic opposite to that of the capacitance of the capacitor so that the resonance frequency of the resonance circuit in the working temperature range will be brought into coincidence approximately with the oscillation frequency.

According to the present invention, a magnetic sheet is formed at a face-to-face position with respect to the antenna coil. This magnetic sheet has such temperature characteristic that causes the inductance of the antenna coil to be changed with a sign of change (characteristic) opposite to that of the capacitance of the capacitor brought about by changes in temperature in the working temperature range. Owing to such change in the inductance of the antenna coil, the resonance frequency of the resonance circuit may be brought into coincidence approximately with the oscillation frequency. According to the present invention, the changes in the resonance frequency caused by changes in the capacitance of the capacitor brought about by changes in temperature may be canceled out by changes in the inductance of the antenna coil in response to the temperature characteristic of the magnetic sheet. The resonance frequency may thus be maintained approximately constant, even though the temperature is changed in the preset working temperature range, thus providing for stabilized communication.

Brief Description of the Drawings

Fig.1 is an exploded perspective view showing the global configuration of a wireless communication system.

Fig.2 is a schematic view showing a circuit configuration of the wireless communication system.

Fig.3 is a graph showing changes in the capacitance of a capacitor brought about by changes in temperature, with the capacitance at room temperature (20°C) as a reference value.

Fig.4 is a graph for illustrating changes in the inductance brought about with changes in temperature.

Fig.5 is a graph showing changes in the real part $\mu'$ of the complex relative permeability of the magnetic sheet against the inductance L of the antenna coil in case the temperature is changed.

Fig.6 is a cross-sectional view of a layered product composed of an antenna coil 11a and a magnetic sheet 12.

Fig. 7 is a plan view for illustrating the concrete size of an antenna coil of an antenna module as built in, for example, a mobile phone.

Fig.8 is a graph showing a temperature characteristic of a multi layered ceramic capacitor.

Fig.9 is a graph showing a temperature characteristic of the inductance of the antenna coil as used in the antenna circuit.

Fig.10 is a graph showing a temperature characteristic of the resonance frequency of the antenna circuit.

Fig.11 is a bar graph showing frequency deviations of the antenna circuits represented by lines A to C of Fig.10 in a temperature range of 0°C to 60°C as the working temperature range.

Best Modes for carrying out the Invention

The modes for practicing the present invention will now be explained in detail in reference to the drawings. It is noted that the present invention is not limited to the modes as now explained and may be modified as desired insofar as such modifications do not depart from the purport of the invention.

<Global configuration>

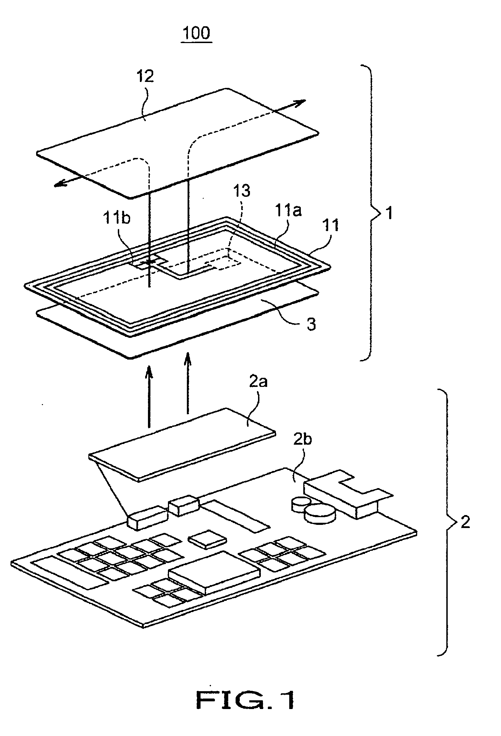

An antenna module 1 according to the present invention is an antenna device that provides for a communication enabled state by electromagnetic induction between it and a transmitter that transmits electromagnetic wave signal. The antenna module is used as it is built into a radio communication system 100 for RFID (Radio Frequency Identification) shown for example in Fig.1.

The radio communication system 100 is made up of the antenna module 1 embodying the present invention and a reader/ writer 2 that accesses the antenna module 1.

The reader/ writer 2 may come into operation as a transmitter that transmits a magnetic field to the antenna module 1. Specifically, the reader/ writer includes an antenna 2a that transmits the magnetic field towards the antenna module 1, and a control board 2b that has communication with the antenna module 1, the control board is inductively coupled to via the antenna 2a.

That is, the reader/ writer 2 includes the control board 2b electrically connected to the antenna 2a. On the control board 2b, there is implemented a control circuit including one or more electronic components, such as an integrated circuit chip(s). The control circuit performs a variety of processing operations based on data received from the antenna module 1. For example, in writing data in the antenna module 1, the control circuit encodes data and modulates a carrier wave of a preset frequency, such 13.56 MHz, with the encoded data. The control circuit amplifies the resulting modulated signal to drive the antenna 2a with the modulated signal amplified. In reading out the data from the antenna module 1, the control circuit amplifies the modulated data signal, received over the antenna 2a, and demodulates the modulated data signal amplified to decode the demodulated data. It is noted that the control circuit uses an encoding system and a modulation system that are used in commonplace reader/ writers. For example, the control circuit uses a Manchester coding system and an ASK (Amplitude Shift Keying) modulation system.

The antenna module 1, built within a casing 3 of an electronic device, includes an antenna circuit 11, a magnetic sheet 12 and a communication processor 13. The antenna circuit includes an antenna coil 11a which is mounted therein and which provides for a communication enabled state between the antenna module and the reader/ writer 2. The antenna circuit is inductively coupled to the reader/ writer. The magnetic sheet 12 is mounted to lay on the antenna coil 11a to pull the magnetic field onto the antenna coil 11a. The communication processor is driven by the current flowing through the antenna circuit 11 to establish communication between the antenna module and the reader/ writer 2.

The antenna circuit 11 is a circuit equivalent to a resonance circuit according to the present invention. The antenna circuit includes the antenna coil 11a and a capacitor 11b electrically connected to the antenna coil 11a.

When the antenna coil 11a receives the magnetic field, transmitted from the reader/ writer 2, the antenna circuit 11 is magnetically coupled by inductive coupling to the reader/ writer 2. The antenna circuit thus is able to receive a modulated electromagnetic signal to deliver the received signal to the communication processor 13.

To pull the magnetic field, transmitted from the reader/ writer 2, onto the antenna coil 11a, the magnetic sheet 12 is provided to lay on the antenna coil 11a. The magnetic sheet 12 causes the inductance of the antenna coil 11a to be changed in an increasing direction in comparison with a case where there is not provided the magnetic sheet. It is noted that the magnetic sheet 12 is affixed to a remote side of the antenna circuit when seen along the magnetic field radiating direction. By so doing, it is possible to suppress that the magnetic field transmitted from the reader/ writer 2 is repelled backwards by metallic components provided within the casing 3 of the mobile electronic device as well as to suppress an eddying current from being produced.

The communication processor 13 is driven by the current flowing through the antenna circuit 11, to which the communication processor is electrically connected, such as to establish communication with the reader/ writer 2. Specifically, the communication processor 13 demodulates the modulated signal received and decodes the demodulated signal to write decoded data in a memory 133, which will be explained subsequently. The communication processor 13 also reads out the data, which is to be transmitted to the reader/ writer 2, from the memory 133, and encodes the read-out data to modulate the carrier wave with the so encoded data. The communication processor 13 transmits the modulated electrical wave signal to the reader/ writer 2 via the antenna circuit 11 to which the reader/ writer 2 is coupled magnetically by inductive coupling.

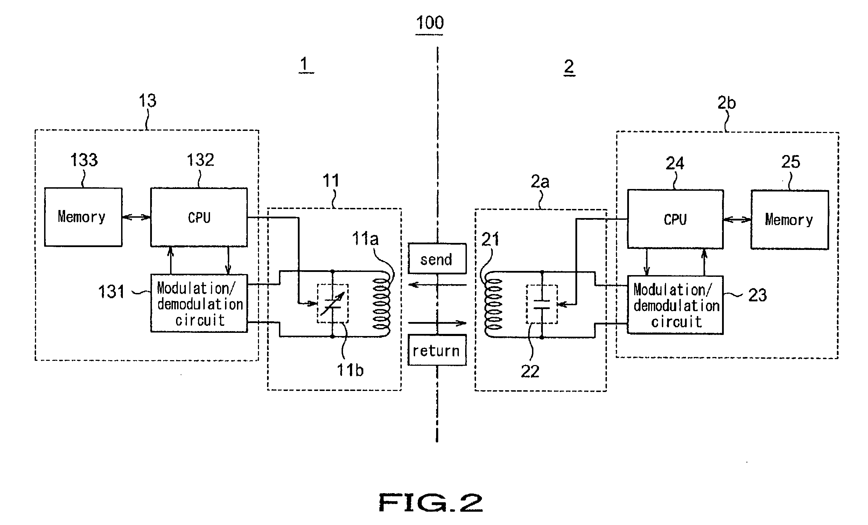

In the radio communication system 100, configured as described above, the concrete circuit configuration of the antenna circuit 11 of the antenna module 1 will now be explained in reference to Fig.2.

The antenna circuit 11 includes the antenna coil 11a and the capacitor 11b, as described above.

The antenna coil 11a is formed to, for example, a rectangular profile, and generates a counter electromotive force, in response to changes in the magnetic fluxes that are radiated by the antenna 2a of the reader/ writer 2 and that are interlinked with the antenna coil 11a.

The capacitor 11b may have its capacitance adjusted by a control voltage output from the communication processor 13. Specifically, the capacitor 11b is a variable capacitance diode, known as 'Vari-Cap', or a variable capacitor formed of a ferroelectric material having high voltage withstanding properties.

In the antenna circuit 11, the antenna coil 11a and the capacitor 11b are electrically connected to each other to form a resonance circuit. Owing to the variable capacitance of the capacitor 11b, it is possible to adjust the resonance frequency of the resonance circuit including the antenna coil 11a and the capacitor 11b.

The communication processor 13 is formed as a micro-computer made up of a modulation/ demodulation circuit 131, a CPU 132 and a memory 133.

The modulation/ demodulation circuit 131 modulates the carrier wave with data sent from the antenna circuit 11 to the reader/ writer 2 to generate a modulated carrier wave by way of performing the processing for modulation. The modulation/ demodulation circuit 131 also extracts the data from the modulated carrier wave output from the reader/ writer 2 by way of performing the processing for demodulation.

The CPU 132 reads out the control voltage information stored in the memory 133 to apply a control voltage V to the capacitor 11b to adjust its capacitance. This compensates deviations in the resonance frequency ascribable to fabrication errors or variations of component elements.

In the memory 133, there is stored the control voltage information that controls the capacitance of the capacitor 11b so that the resonance frequency of the antenna circuit 11 will be coincident with the magnetic field transmitting frequency from the reader/ writer 2. It is noted that, in controlling the capacitance of the capacitor 11b, the deviations between the resonance frequency of the antenna circuit 11 and the magnetic field transmitting frequency of the reader/ writer 2 are taken into consideration.

In the reader/ writer 2 that has communication with the antenna module 1, configured as described above, the antenna 2a includes an antenna coil 21 and a capacitor 22, while the control board 2b includes a modulation/ demodulation circuit 23, a CPU 24 and a memory 25.

The antenna coil 21 is formed to, for example, a rectangular profile, and is magnetically coupled to the antenna coil 11a of the antenna module 1 to transmit/ receive data, such as commands or write data, as well as to deliver the power used in the antenna module 1 to the antenna module.

The capacitor 22 is connected to the antenna coil 21 to form a resonance circuit. The modulation/ demodulation circuit 23 modulates the carrier wave with data to be delivered from the reader/ writer 2 to the antenna module 1 by way of performing the processing for modulation. The modulation/ demodulation circuit 23 also extracts the data from the modulated wave signal transmitted from the antenna module 1 by way of performing the processing for demodulation.

The CPU 24 controls the modulation/ demodulation circuit 23 to deliver the data read out from the memory 25 to the antenna module 1, while performing the processing of writing the data demodulated by the modulation/ demodulation circuit 23 in the memory 25.

The antenna circuit 11 of the antenna module 1 thus adjusts the capacitance of the capacitor 11b of the antenna circuit 11 by the control voltage controlled by the communication processor 13. The resonance frequency of the antenna circuit 11 is thus able to be brought into coincidence with the oscillation frequency of the reader/ writer 2 to provide for stabilized communication.

<Temperature Compensation>

The capacitance of the capacitor 11b in the antenna circuit 11 is varied with changes in temperature, so that, even if the same control voltage is applied to the capacitor 11b, the resonance frequency of the antenna circuit is deviated with changes in temperature.

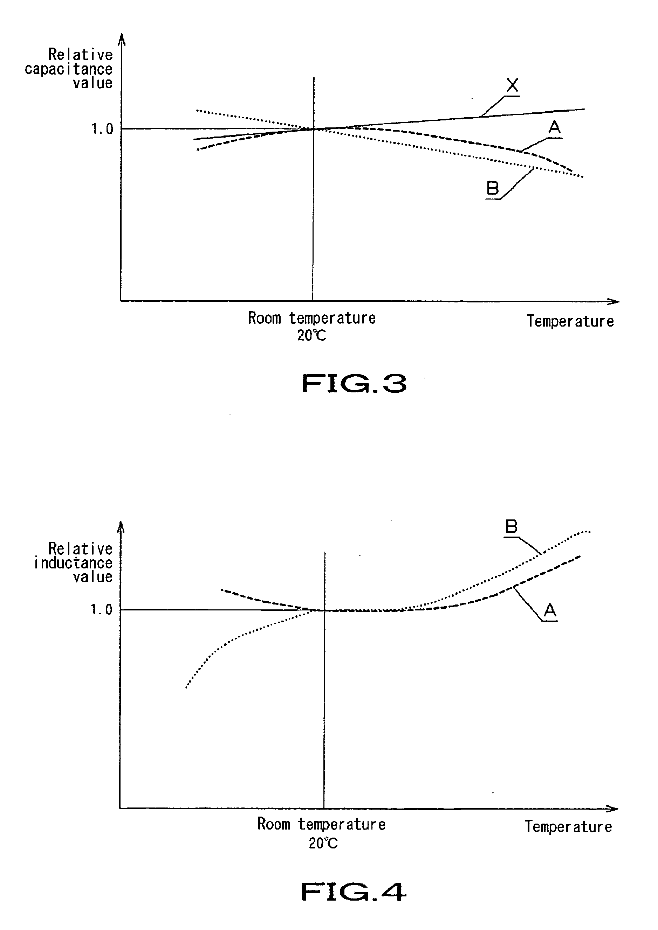

Fig.3 shows changes in the capacitance of the capacitor, caused by changes in temperature, with the capacitance at room temperature (20°C) as a reference value.

The capacitance of a variable capacitance diode monotonously increases with rise in temperature, as indicated by a line X in Fig.3. Thus, in the resonance circuit employing the variable capacitance diode as a capacitor for resonance, the resonance frequency is lowered with rise in temperature.

The capacitance of a variable capacitor, formed of a material 1 of a ferroelectric material, increases with rise in temperature, as long as the temperature is 20°C or lower, while decreasing with rise in temperature as long as the temperature is higher than 20°C, as indicated by a line A in Fig.3. Thus, in a resonance circuit with a built-in variable capacitor, formed of the material 1 of the ferroelectric material, the resonance frequency is changed against changes in temperature 'in an upwardly convex' pattern, with 20°C as a locally maximum value.

On the other hand, the capacitance of a variable capacitor, formed of a material 2 of a ferroelectric material, monotonously decreases with rise in temperature, as indicated by a line B in Fig.3. Thus, in a resonance circuit with a built-in variable capacitor, formed of the material 2 of the ferroelectric material, the resonance frequency becomes higher with rise in temperature.

To cancel out changes in the resonance frequency, brought about by changes in capacitance of the capacitor in response to changes in temperature, by changes in the inductance of the antenna coil, the antenna module 1 exploits a characteristic that the inductance of the antenna coil is changed in response to a temperature characteristic of the magnetic sheet.

It is noted that changes in the resonance frequency, caused by changes in the capacitance of the variable capacitor, formed of the ferroelectric material as the material 1, are able to be canceled out by changes in inductance of an antenna coil A having a temperature characteristic shown by the line A of Fig.4.

On the other hand, changes in the resonance frequency, caused by changes in the capacitance of the variable capacitor, formed of the ferroelectric material as the material 2, are able to be canceled out by changes in inductance of an antenna coil B having a temperature characteristic shown by the line B of Fig.4.

The reason the deviations in the resonance frequency are able to be canceled out in this manner is that the resonance frequency f can be derived from the inductance L of the antenna coil and the capacitance C of the capacitor in accordance with the following equation:

$$f= 1/(2\pi\sqrt{(LC)})$$

Since the antenna coil itself is formed by a linear conductor, it is difficult with the antenna coil to get the temperature characteristic shown in Fig.4. The present inventor has focused attention on a characteristic that the inductance of an antenna coil is varied in accordance with a temperature characteristic of a magnetic sheet formed to lay on the antenna coil. The present inventor thus has arrived at exploiting the temperature characteristic shown in Fig.4.

Specifically, the magnetic characteristic of a ferrite, used as a magnetic material of the magnetic sheet, disappears at higher temperature than the Curie temperature. However, at a temperature not higher than the Curie temperature, the magnetic characteristic of the ferrite with respect to temperature may be adjusted by adjusting the contents as well as the properties of the individual magnetic materials.

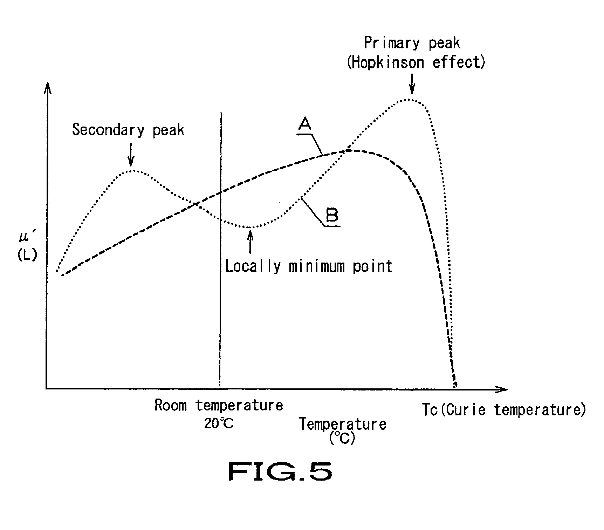

Fig.5 shows how the real part μ' of the complex relative permeability of the magnetic sheet, corresponding to the inductance L of the antenna coil, is changed with changes in temperature.

For example, the temperature characteristic of the above mentioned antenna coil A may be obtained by affixing a magnetic sheet formed of a ferrite A, having a magnetic characteristic shown by the line A of Fig.5, to the antenna coil A.

On the other hand, the temperature characteristic of the above mentioned antenna coil B may be obtained by affixing a magnetic sheet formed of a ferrite B, having a magnetic characteristic shown by the line B of Fig.5, to the antenna coil B.

In this manner, in the antenna circuit 11 of the present embodiment, the changes in the resonance frequency, caused by changes in capacitance of the capacitor 11b, caused in turn with changes in temperature, are canceled out by changes in inductance of the antenna coil 11a. These inductance changes are brought about in response to the temperature characteristic of the magnetic sheet 12.

If simply the temperature characteristic of the magnetic sheet 1 is adjusted, it is difficult to cancel out the changes in the resonance frequency, caused by changes in capacitance of the capacitor 11b, by changes in inductance of the antenna coil 11a, irrespectively of temperature ranges. It is thus necessary to set a working temperature range at the outset and to design the temperature characteristic of the magnetic sheet 12 so as to maintain the resonance frequency approximately constant despite changes in temperature within the so set working temperature range. The working temperature range is to be set beforehand so that the antenna module 1 and the reader/ writer 2 are able to have communication positively with each other in case the temperature is changed during the operation within this temperature range.

Thus, in the antenna circuit 11 of the present embodiment, it is possible to maintain the resonance frequency approximately constant, despite changes in temperature within the preset working temperature range, such as to provide for stabilized communication. To this end, the fact that the inductance of the antenna coil 11a is changed in response to the temperature characteristic of the magnetic sheet 12 is exploited.

There is no particular limitation to the temperature characteristic of the antenna coil 11 of the present embodiment, provided that changes in the resonance frequency caused by changes in capacitance of the capacitor caused in turn by changes in temperature are able to be canceled out by changes in inductance of the antenna coil in response to the temperature characteristic of the magnetic sheet.

That is, in case the capacitance of the capacitor monotonously increases with rise in temperature, it is sufficient to use an antenna coil the inductance of which decreases monotonously such as to cancel out the changes in the resonance frequency brought about by such changes in the capacitance. On the other hand, in case the capacitance of the capacitor is changed in an 'upwardly convex' pattern with rise in temperature, an antenna coil, whose inductance is changed in a 'downwardly convex' pattern such as to cancel out the changes in the resonance frequency caused by such changes in capacitance, may be used.

Thus, in the antenna circuit 11 of the present embodiment, it is sufficient that changes in the capacitance of the capacitor and those in the inductance of the antenna coil are of opposite signs (characteristics) to each other in response to changes in temperature. However, from the point of view of more readily accomplishing the designing of maintaining the approximately constant resonance frequency, it is particularly desirable that the capacitance of the capacitor and the inductance of the antenna coil are monotonously changed responsive to changes in temperature, as may be seen from the following concrete examples.

It is assumed first of all that the capacitor 11b has such temperature characteristic that its capacitance is monotonously varied with changes in the temperature in the working temperature range.

With the capacitor 11b having such temperature characteristic, the magnetic sheet 12 is to be formed of a material having such temperature characteristic that causes the inductance of the antenna coil 11a to be changed such as to satisfy the condition of the following relationship:

$$L1/L2 \approx C2/C1$$

where L1, L2 denote inductance values of the antenna coil 11a at upper and lower limit values of the working temperature range, respectively, and C1, C2 denote capacitance values of the capacitor 11b at upper and lower limit values of the working temperature range, respectively.

In the antenna circuit 11, the resonance frequency may be maintained approximately constant with ease by having the capacitance of the capacitor 11b and the inductance of the antenna coil 11a monotonously changed at about the same rate of change with respective opposite signs of change to each other within the preset working temperature range.

On the other hand, there may be cases in which the capacitance of the capacitor 11b and the inductance of the antenna coil 11a are monotonously changed with opposite signs of change (characteristics) to each other, but at respective different rates of change, within the preset working temperature range. In these cases, it is difficult to cancel out changes in the resonance frequency, caused by changes in the capacitance of the capacitor 11b, by changes in the inductance of the antenna coil 11a.

In such cases, the spacing between the antenna coil 11a and the magnetic sheet 12 may be adjusted to adjust the rate of change of the inductance of the antenna coil 11a to cancel out the changes in the resonance frequency caused by the changes in the capacitance of the capacitor 11b by changes in the inductance of the antenna coil 11a.

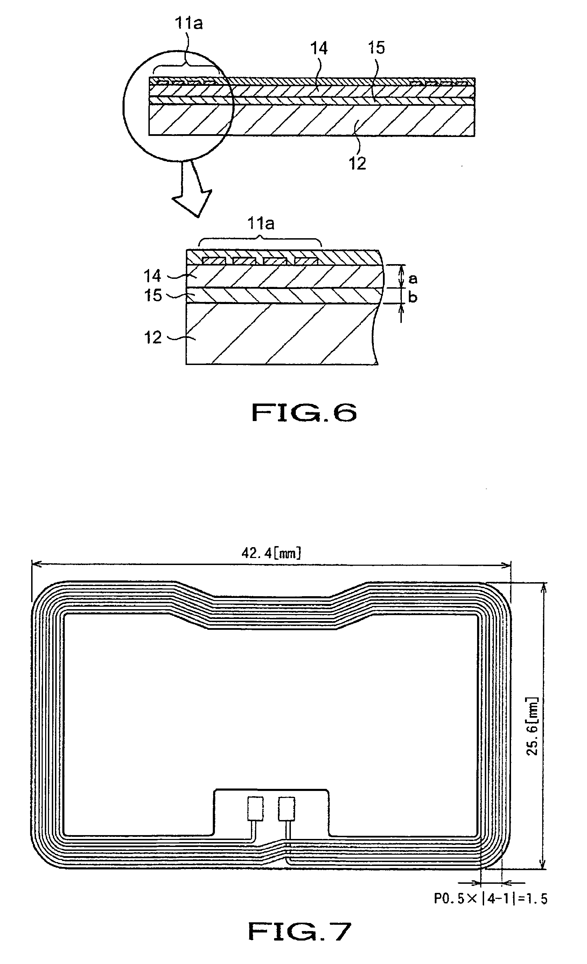

Fig.6 shows the structure of a layered unit composed of the antenna coil 11a and the magnetic sheet 12.

Referring to Fig.6, the antenna coil 11a is mounted on a printed circuit board 14 which is a flexible printed board formed of, for example, polyimide, liquid crystal polymer or Teflon (registered trademark). The magnetic sheet 12 is affixed to the printed circuit board 14 via an adhesive layer 15, such as ADH layer. With such layered structure, it is possible to adjust the spacing between the antenna coil 11a and the magnetic sheet 12 based on the variable film thickness of the adhesive layer 15. That is, the spacing between the antenna coil 11a and the magnetic sheet 12 is represented by the sum of a film thickness a of the printed circuit board 14 and a film thickness b of the adhesive layer 15.

It is noted that, if the spacing between the antenna coil 11a and the magnetic sheet 12 is increased, the inductance of the antenna coil 11a tends to decrease monotonously. Thus, if the rate of change of inductance of the antenna coil 11 is large compared to the rate of change of capacitance of the capacitor 11b, caused by changes in temperature, adjustment is made to increase the spacing between the antenna coil 11a and the magnetic sheet 12. By so doing, the inductance of the antenna coil and the capacitance of the capacitor 11b may be monotonously changed at about the same rate of change with respective opposite signs of changes in the working temperature range, and hence the resonance frequency may readily be maintained approximately constant.

It is also noted that the printed circuit board 14 may also be a rigid board, for example, a board of an epoxy resin, exhibiting plastic properties, in lieu of the flexible printed circuit board. It is however preferred to use a flexible printed circuit board from the perspective of relatively suppressing the dielectric constant.

In the above described antenna module 1, the magnetic sheet 12 is formed to lay on the antenna coil 11a. The magnetic sheet 12 has such temperature characteristic that the sign of changes in the inductance of the antenna coil 11a with the annexed magnetic sheet is opposite to that in the capacitance of the capacitor 11b in the working temperature range so that the resonance frequency of the resonance circuit may be made approximately coincident with the oscillation frequency in the working temperature range. In this manner, in the antenna module 1, changes in the resonance frequency caused by changes in capacitance of the capacitor 11b responsive to changes in temperature may be canceled out by changes in the inductance of the antenna coil 11a, provided that the antenna coil is affixed to the magnetic sheet 12 having the above mentioned temperature characteristic. By so doing, the resonance frequency may be maintained approximately constant despite changes in the temperature within the preset working temperature range, thereby providing for stabilized communication.

A concrete example antenna module, built into e.g., a mobile phone, will now be explained, taking an antenna with an outer size of 42.4 [mm] by 25.6 [mm] and with the width of a conductor of 0.3 [mm], with the distance between adjacent conductors being 0.2 [mm], and with the number of turns being 4, as shown in Fig.7. The inductance of such antenna coil is 2 [$\mu$H]. The capacitance of the capacitor necessary for resonance at 13.56 MHz is approximately 69 [$\mu$F]. If, in such example antenna module, the capacitance of the capacitor has changed 10% in the working temperature range, and no measures for temperature compensation are taken, the frequency deviation reaches approximately 700 [kHz], such that regular communication may not be attained.

Conversely, with the antenna module 1 of the present embodiment, it is possible to design the temperature characteristic of the magnetic sheet 12 such as to suppress frequency deviations to approximately 70 [kHz] which is not problematical in routine communication. It is noted that such value of the frequency deviations is on the order of 1% calculated as changes in capacitance of the capacitor in the working frequency range.

The temperature compensation, described above, may be made by detecting the room temperature of the resonance circuit by a temperature sensor and by controlling the control voltage applied to the capacitor based on the detected result. In the antenna module 1 of the present embodiment, temperature compensation may be made without using such temperature sensor, thus reducing the cost or the device scale to advantage.

Example 1

In the following, with the use of circuit elements, as used in an actual antenna circuit, the communication characteristic of the antenna module of the above described embodiment will be explained in detail.

In the following Example, the resonance frequency of the antenna circuit in the vicinity of 20°C is tuned to 13.56 [MHz], which is the frequency transmitted from the reader/ writer 2, and evaluation was made of the deviations of the resonance frequency at 0°C to 60°C as the operating frequency range.

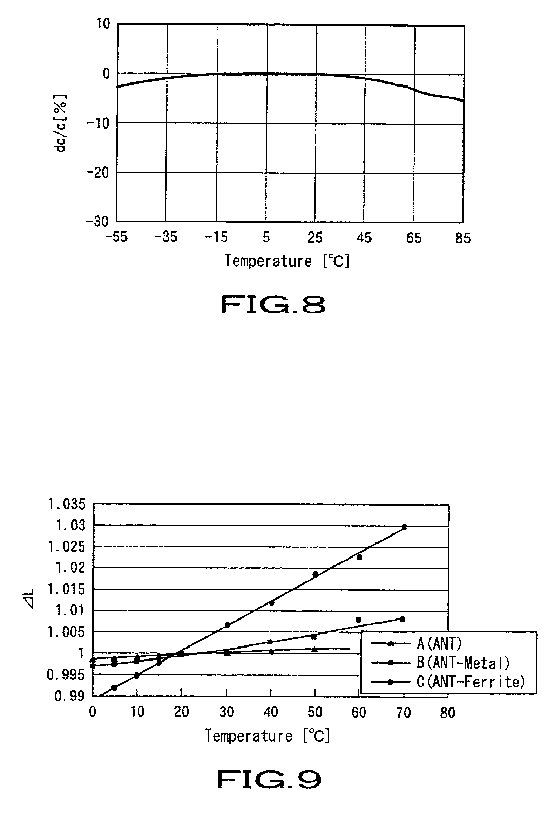

A multi layered ceramic capacitor with a temperature characteristic shown in Fig.8 was used as a capacitor for resonance of the antenna circuit. As shown in Fig.8, the layered ceramic capacitor is among so-called variable capacitors, and has deviations of ±5% in terms of a variation dc/c within a temperature range of-55°C to 85°C.

It is noted that, as also shown in Fig.8, the capacitance of the variable capacitor is varied in an 'upwardly convex' pattern within the temperature range of -55°C to 85°C. However, for 0°C to 60°C, as the operating frequency range, the capacitance decreases monotonously. Thus, from the perspective of readily implementing the above mentioned characteristics with the opposite sign of change, the antenna coil, having a temperature characteristic such that its inductance value monotonously decreases for 0°C to 60°C, as the operating frequency range, as shown in Fig.9, was used in the antenna circuit.

In Fig.9, a line A stands for a temperature characteristic of the inductance of an antenna coil not including the layered magnetic sheet.

A line B stands for a temperature characteristic of the inductance of an antenna coil including the layered metal magnetic sheet. As the metal magnetic sheet, an FeSiCr based magnetic sheet was used.

A line C stands for a temperature characteristic of the inductance of an antenna coil including the layered magnetic sheet of ferrite having a temperature characteristic that is designed to maintain the resonance frequency approximately constant. As the magnetic sheet of ferrite, an Ni-Zn based magnetic sheet was used.

In the antenna coil, by itself, and in the antenna coil, having the metal magnetic sheet layered thereon, changes in inductance caused by changes in temperature are relatively small, as shown in Fig.9. On the other hand, in the antenna coil having the magnetic sheet of ferrite layered thereon, the inductance is changed with deviations of approximately 3.3% within the preset working temperature range of 0°C to 60°C.

The temperature characteristics of the resonance frequencies of antenna circuits, obtained on combining the capacitor, having the temperature characteristic shown in Fir.8, and the antenna coils, having the different temperature characteristics shown in Fig.9, were then found by calculations.

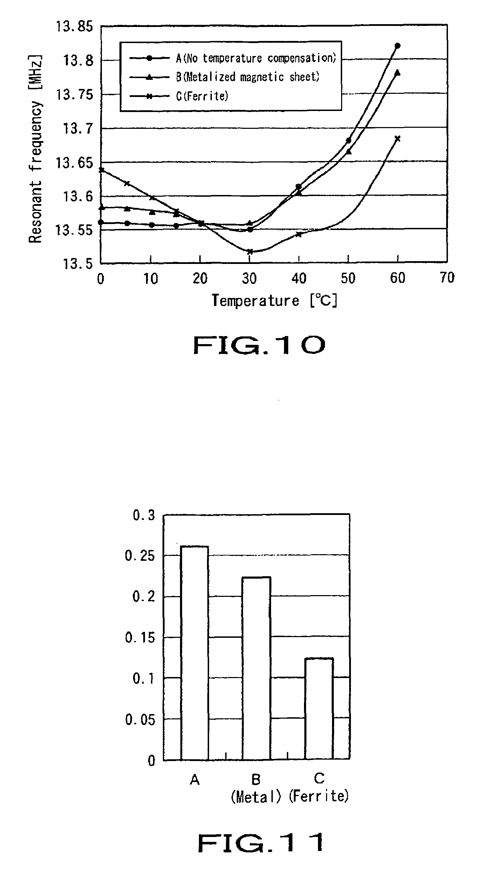

Fig.10 shows temperature characteristics of the resonance frequencies of the antenna circuits provided with the respective antenna coils.

A line A in Fig.10 shows a temperature characteristic of the resonance frequency of the antenna circuit having the antenna coil not having the magnetic sheet layered thereon. A line B in Fig.10 shows a temperature characteristic of the resonance frequency of the antenna circuit including the antenna coil having the metal magnetic sheet layered thereon. On the other hand, a line C in Fig.10 shows a temperature characteristic of the inductance of the antenna coil having layered thereon the magnetic sheet of ferrite designed to maintain the resonance frequency approximately constant.

Referring to Fig.10, the resonance frequency of each of the antenna circuits of the lines A and B acutely increases beginning from a temperature approximately in excess of 30°C. It is noted that the temperature characteristic of the capacitor is such that the capacitance decreases with rise in temperature. Hence, the resonance frequency of the antenna circuit for the line A and that for the line B were designed at the outset so as to be smaller than that for the line C at 0°C which is the lower limit value of the working frequency range.

On the other hand, in the antenna circuit of the line C of Fig.10, the resonance frequency is to be set in the vicinity of 13.65 [MHz] at 0°C as the lower limit of the working frequency range. To this end, the resonance frequency is tuned to 13.56 [MHz] at approximately 20°C. As a result, the resonance frequency is lowered at 30°C to a lower limit peak value. However, the gradient of the line C is milder than that of the resonance frequencies of the other antenna circuits. Thus, in the antenna circuit of the line C, it has been possible to suppress deviations of the resonance frequency to approximately 0.1 [MHz] within the working temperature range of from 0°C to 60°C.

Fig.11 shows, for the working temperature range of from 0°C to 60°C, the deviations (%) of the resonance frequencies of the antenna circuits represented by the lines A, B and C. It is seen from Fig.11 that, with the antenna circuit of the line C, the deviations of the resonance frequency may be maintained at ca. ±10% in the working temperature range, thus indicating that the resonance frequency may be maintained at an approximately constant value in contradistinction from those of the other two antenna circuits.

It is seen from the above mentioned example that, with the antenna module of the present embodiment, the resonance frequency may be maintained at an approximately constant value, even if the temperature is varied within the preset working temperature range, thus assuring stabilized communication. This is made possible by canceling out changes in the resonance frequency,

caused by changes in the capacitance of the capacitor, in turn caused by changes in temperature, by changes in the inductance of the antenna coil.

**Claims**

1. An antenna device comprising:

   a resonance circuit including an antenna coil, receiving a magnetic field transmitted at preset an oscillation frequency from a transmitter, and a capacitor electrically connected to the antenna coil; the resonance circuit being inductively coupled to the transmitter to provide for a transmission enabled state; and
   a magnetic sheet provided at a face-to-face position with respect to the antenna coil and configured for changing the inductance of the antenna coil;
   the capacitor having a temperature characteristic in which the capacitance of the capacitor is changed with changes in temperature within a working temperature range;
   the magnetic sheet being formed of a magnetic material having a temperature characteristic in which the inductance of the antenna coil is changed with a characteristic opposite to that of the capacitance of the capacitor, changed with changes in temperature in the working temperature range, so that the resonance frequency of the resonance circuit in the working temperature range will be brought into coincidence approximately with the oscillation frequency.

2. The antenna device according to claim 1, wherein, the capacitor has a temperature characteristic in which the capacitance thereof is monotonously changed with changes in temperature in the working temperature range;
   the magnetic sheet being formed of a magnetic material of a temperature characteristic in which the inductance of the antenna coil is changed to satisfy the equation:

$$L1/L2 \approx C2/C1$$

   where L1, L2 stand for inductance values of the antenna coil at upper and lower limit values of the working temperature range, respectively and C1, C2 stand for capacitance values of the capacitor at upper and lower limit values of the working temperature range, respectively.

3. The antenna device according to claim 2, wherein, the capacitor is formed of a ferroelectric material whose capacitance is monotonously changed with rise in temperature;
   the magnetic sheet being formed of a magnetic material of a temperature characteristic in which the inductance of the antenna coil is monotonously changed with rise in temperature within the working temperature range to bring the resonance frequency of the resonance circuit into coincidence approximately with the oscillation frequency within the working temperature range.

4. The antenna device according to any one of claims 1 to 3, wherein,
   the magnetic sheet is formed of a ferrite composed of a plurality of sorts of magnetic materials;
   the magnetic sheet being of a temperature characteristic in which, by adjusting the contents of component magnetic materials thereof, the resonance frequency of the resonance circuit is able to be brought into coincidence approximately with the oscillation frequency within the working temperature range.

5. A communication device comprising:

   a resonance circuit including an antenna coil, receiving a magnetic field transmitted at preset an oscillation frequency from a transmitter, and a capacitor electrically connected to the antenna coil; the resonance circuit being inductively coupled to the transmitter to provide for a transmission enabled state;
   a magnetic sheet provided at a face-to-face position with respect to the antenna coil and configured for changing the inductance of the antenna coil; and
   a communication processor driven by a current flowing through the resonance circuit to have communication with the transmitter;
   the capacitor having a temperature characteristic in which the capacitance of the capacitor is changed with changes in temperature in the working temperature range;
   the magnetic sheet being formed of a magnetic material having a temperature characteristic in which the inductance of the antenna coil is changed with a characteristic opposite to that of the capacitance of the capacitor so that the resonance frequency of the resonance circuit in the working temperature range will be brought into coincidence approximately with the oscillation frequency.

<u>100</u>

12

13

11b   11a   11

1

3

2a

2b

2

FIG. 1

FIG.2

**FIG.3**

**FIG.4**

FIG.5

11a

14 15

12

FIG.6

11a

14
15

12

a
b

42.4[mm]

25.6[mm]

P0.5×|4-1|=1.5

FIG.7

FIG.8

FIG.9

FIG.10

FIG.11

<table>
<tr><td colspan="2"><b>INTERNATIONAL SEARCH REPORT</b></td><td>International application No.<br>PCT/JP2010/062618</td></tr>
</table>

**A. CLASSIFICATION OF SUBJECT MATTER**
*H01Q7/06*(2006.01)i, *G06K19/07*(2006.01)i, *G06K19/077*(2006.01)i, *H01F27/00* (2006.01)i

According to International Patent Classification (IPC) or to both national classification and IPC

**B. FIELDS SEARCHED**

Minimum documentation searched (classification system followed by classification symbols)
H01Q7/06, G06K19/07, G06K19/077, H01F27/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2006-262053 A (Sony Corp.),<br>28 September 2006 (28.09.2006),<br>paragraphs [0033] to [0040]; fig. 1<br>(Family: none) | 1-5 |
| Y | WO 2008/105477 A1 (Kyocera Corp.),<br>04 September 2008 (04.09.2008),<br>paragraphs [0001] to [0009], [0058] to [0066];<br>fig. 6, 7<br>& US 2010/0103055 A | 1-5 |
| Y | JP 10-284315 A (TDK Corp.),<br>23 October 1998 (23.10.1998),<br>paragraphs [0024] to [0031]; fig. 1 to 4<br>& US 5916476 A | 4 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>20 October, 2010 (20.10.10) | Date of mailing of the international search report<br>02 November, 2010 (02.11.10) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009175751 A
- JP 2009111483 A